# EUROPÄISCHE PATENTANMELDUNG

(11) **EP 3 178 590 A1**
(43) Veröffentlichungstag der Anmeldung: **14.06.2017**
(21) Anmeldenummer: 15198424.2
(22) Anmeldetag: 08.12.2015
(51) Int. Cl.: B23B 31/16, B23B 31/02, B23B 31/163, B23F 23/06, B66C 1/62, F16H 55/17

(54) **ROTATIONSSYMMETRISCHES MASCHINENBAUTEIL, INSBESONDERE ZAHNRAD, SPANNVORRICHTUNG UND VERFAHREN ZUM SPANNEN**

(71) Anmelder: Siemens Aktiengesellschaft, 80333 München (DE)
(72) Erfinder: Stöhler, Udo, 46399 Bocholt (DE)

(57) **Zusammenfassung**

Es wird ein rotationssymmetrisches Maschinenbauteil (5) offenbart, wobei in mindestens einer quer zur Rotationsachse (3) verlaufenden Stirnseite (520) des Maschinenbauteils (5) eine zur Aufnahme einer Spannvorrichtung (7) geeignete Ringnut (6) eingedreht ist, welche bezüglich der Rotationsachse (3) zentriert ist. Es wird auch eine Spannvorrichtung (7) mit zwei Spannkrallen (7) zum einführen in die Ringnut (6) offenbart. Ferner wird ein Verfahren zum Anbringen der Spannvorrichtung (7) an dem rotationssymmetrischen Maschinenbauteil (5) offenbart.

## Beschreibung

Die vorliegende Erfindung betrifft ein Maschinenbauteil, eine Spannvorrichtung sowie ein Verfahren zum Anbringen einer Spannvorrichtung an einem Maschinenbauteil.

Maschinenbauteile, die aufgrund ihres Gewichtes während der Produktion, der Montage und des Service nicht mehr von Hand transportiert werden können, erfordern eine Hebemöglichkeit. Zum Heben und Tragen von derartigen Maschinenbauteilen ist es bekannt, Ringschrauben und Hebellaschen an der Außenkontur der Maschinenbauteile anzubringen. Diese Vorrichtungen sind aber unbeweglich und ergeben eine Störkontur am Maschinenbauteil.

Alternativ ist es bekannt, in herkömmlichen Maschinenbauteilen, die aufgrund ihre Gewichtes während der Produktion, der Montage und des Kundendienstes nicht mehr von Hand transportiert werden können, Gewindebohrungen anzubringen, in welche Schrauben einschraubbar sind. Diese Schrauben können Anschlagwirbel sein, an denen Haltemittel wie Ketten oder Seile befestigt werden, um das Maschinenbauteil mithilfe eines Flaschenzugs oder eines Krans zu heben bzw. zu transportieren. Diese Gewindebohrungen werden auch verwendet, um an den Maschinenbauteilen Spannmittel anzuschrauben, mit denen das Maschinenbauteil an einer Bearbeitungsmaschine, z.B. einer Drehmaschine, aufgespannt wird.

Um eine ausreichende Verankerung der Schrauben sicherzustellen, müssen sich die Gewindebohrungen relativ weit in das Maschinenbauteil hinein erstrecken. Die somit bestehende Materialschwächung kann in Fällen von relativ dünnwandigen Maschinenbauteilen, z.B. Zahnrädern, zu Schadensfällen, vor allem Bruch, im Bereich der Gewindebohrungen führen.

Es besteht Bedarf nach einer verbesserten Möglichkeit, Maschinenbauteile zu transportieren und aufzuspannen.

Diese Aufgabe wird erfindungsgemäß durch ein Maschinenbauteil mit den in Anspruch 1 angegebenen Merkmalen gelöst. Das Maschinenbauteil ist rotationssymmetrisch. In mindestens einer quer zur Rotationsachse des Maschinenbauteils verlaufenden Stirnseite des Maschinenbauteils ist eine Ringnut eingedreht. Die Ringnut ist bezüglich der Rotationsachse zentriert. Die Ringnut ist außerdem zur Aufnahme einer Spannvorrichtung geeignet.

Die Erfindung beruht auf der Erkenntnis, dass durch eine stirnseitige Ringnut die Schwächung des Maschinenbauteils, die bei herkömmlichen Gewindebohrungen ein Schadensrisiko darstellt, erheblich verringert werden kann. Die bisher verwendeten Gewindebohrungen, z.B. zwei bis fünf Bohrungen pro Stirnseite, schwächen das Maschinenbauteil, was zu Bruch führen könnte. Die Erfindung verzichtet auf Bohrungen, d.h. die Nut schwächt das Bauteil an dieser Stelle nicht, ein Bruch ist somit ausgeschlossen.

Trotzdem sind Wirbelschrauben als Anschlagpunkt für Transportmittel weiterhin einsetzbar, d.h. die bisherige Schnittstelle wird nicht verändert. Die Spannvorrichtung, welche in der erfindungsgemäßen Ringnut verspannt wird, kann nämlich Gewindebohrungen aufweisen, in welche Wirbelschrauben direkt eindrehbar sind. Die Nut wird vorzugsweise durch Drehbearbeitung hergestellt, was günstiger als das bei Gewindebohrungen anfallende Bohren und Gewindeschneiden ist.

An zumindest einer, vorzugsweise beiden Stirnseiten des Maschinenbauteils wird eine ringförmige, vorzugsweise hinterdrehte Nut eingedreht. In diese Nut greifen zwei oder mehr Nutsteine ein, welche durch eine Spannvorrichtung gegeneinander verspannt werden können. Die Spannvorrichtung weist vorzugsweise Bohrungen auf, in welche wiederum die bekannten Wirbelschrauben einschraubbar sind.

Ein Einsatzgebiet der vorliegenden Erfindung ist die Produktion, die Montage und der Kundendienst (= Service) von Maschinenbauteilen, z.B. Zahnrädern.

Vorteilhafte Ausgestaltungen und Weiterbildungen der Erfindung sind in den abhängigen Ansprüchen angegeben.

Gemäß einer vorteilhaften Ausgestaltung weist die Ringnut eine Nutöffnung und einen Nutboden sowie eine radial innere Nutwand und eine radial äußere Nutwand auf, welche sich jeweils zwischen der Nutöffnung und dem Nutboden erstrecken, wobei die radial innere Nutwand in ihrem Verlauf von der Nutöffnung zum Nutboden eine Neigung zu der Rotationsachse hin aufweist. Es handelt sich mit anderen Worten um eine hinterdrehte Nut, d.h. eine Nut, deren Nutöffnung und Nutboden nicht senkrecht übereinander liegen. Diese Hinterschneidung ermöglicht einen stabilen Sitz einer Spannkralle in der Nut. Alternativ ist es aber auch möglich, dass die radial äußere Nutwand in ihrem Verlauf von der Nutöffnung zum Nutboden eine Neigung von der Rotationsachse weg aufweist. In diesem Fall wird die Spannvorrichtung in der Ringnut gegen die radial äußere Nutwand verspannt, d.h. es wird die radial äußere Nutwand zum Verspannen und Tragen verwendet.

Gemäß einer vorteilhaften Ausgestaltung ist in beiden quer zur Rotationsachse verlaufenden Stirnseiten des Maschinenbauteils jeweils eine zur Aufnahme einer Spannvorrichtung geeignete Ringnut eingedreht, welche bezüglich der Rotationsachse zentriert ist. Somit kann das Maschinenbauteil an jeder Stirnseite gehalten und aufgespannt werden. Das hat den Vorteil einer größeren Freiheit im Produktions-, Montage- und Serviceprozess. Auf diese Weise ist z.B. sowohl eine Innenals auch eine Außenbearbeitung des Maschinenbauteils möglich.

Gemäß einer vorteilhaften Ausgestaltung ist das Maschinenbauteil ein Rohling zur Fertigung eines Zahnrads oder das aus dem Rohling gefertigte Zahnrad.

Gemäß einer vorteilhaften Ausgestaltung ist das rotationssymmetrische Maschinenbauteil ein Zahnrad mit einem Zahnring und einer von dem Zahnring umschlossenen Zentralöffnung, wobei die Ringnut die Zentralöffnung vollständig umschließt. Gemäß einer vorteilhaften Ausgestaltung ist das Zahnrad ein Planetenrad.

Die oben angegebene Aufgabe wird erfindungsgemäß außerdem durch eine Spannvorrichtung mit den in Anspruch 7 angegebenen Merkmalen gelöst. Die Spannvorrichtung dient zum Anbringen an einem rotationssymmetrischen Maschinenbauteil, wie oben beschrieben. Die Spannvorrichtung weist mindestens zwei Spannkrallen zum Einführen in eine Ringnut des Maschinenbauteils auf. Die beiden Spannkrallen können gegeneinander verspannt werden, so dass sie fest und unverrückbar, aber lösbar in der Ringnut sitzen.

Gemäß einer vorteilhaften Ausgestaltung weisen die Spannkrallen an den einander zugewandten Seiten eine an die Form der Ringnut angepasste Formgebung auf. Vorzugsweise sind die Spannkrallen korrespondierend zu der radial inneren Nutwand ausgebildet, welche in ihrem Verlauf von der Nutöffnung zum Nutboden eine Neigung zu der Rotationsachse hin aufweist. Die Spannkrallen weisen somit vorzugsweise eine zur Rotationsachse ausragende Nase auf.

Die Aufgabe wird erfindungsgemäß außerdem durch ein Verfahren mit den in Anspruch 8 angegebenen Merkmalen gelöst. Das Verfahren dient zum Anbringen einer Spannvorrichtung an einem rotationssymmetrischen Maschinenbauteil. Dabei ist in mindestens einer quer zur Rotationsachse verlaufenden Stirnseite des Maschinenbauteils eine zur Aufnahme der Spannvorrichtung geeignete Ringnut eingedreht, welche bezüglich der Rotationsachse zentriert ist. Beim Verfahren werden die Krallen der Spannvorrichtung an mindestens zwei Stellen der Ringnut in die Ringnut eingesetzt und gegeneinander verspannt.

Im Folgenden wird die Erfindung anhand mehrerer Ausführungsbeispiele unter Zuhilfenahme der Zeichnung erläutert. Es zeigt jeweils schematisch und nicht maßstabsgetreu
- Fig. 1: einen Schnitt eines herkömmlichen Rohlings für ein Planetenrad;
- Fig. 2: ein Detail von Fig. 1;
- Fig. 3: eine Ansicht einer herkömmlichen Transportvorrichtung unter Verwendung von Wirbelschrauben;
- Fig. 4: einen Schnitt eines erfindungsgemäßen Rohlings für ein Planetenrad;
- Fig. 5: ein Detail von Fig. 4;
- Fig. 6: eine Ansicht einer erfindungsgemäßen Spannvorrichtung auf einem Rohling;
- Fig. 7: ein Detail von Fig. 6;
- Fig. 8: eine Ansicht einer alternativen Ausgestaltung einer erfindungsgemäßen Spannvorrichtung auf einem Rohling;
- Fig. 9: einen Schnitt der Spannvorrichtung von Fig. 8;
- Fig. 10: eine Ansicht einer Aufspannung eines Rohlings;
- Fig. 11: ein Detail von Fig. 10;
- Fig. 12: einen Schnitt XII-XII des Details von Fig. 11; und
- Fig. 13: einen Schnitt einer alternativen Spannvorrichtung.

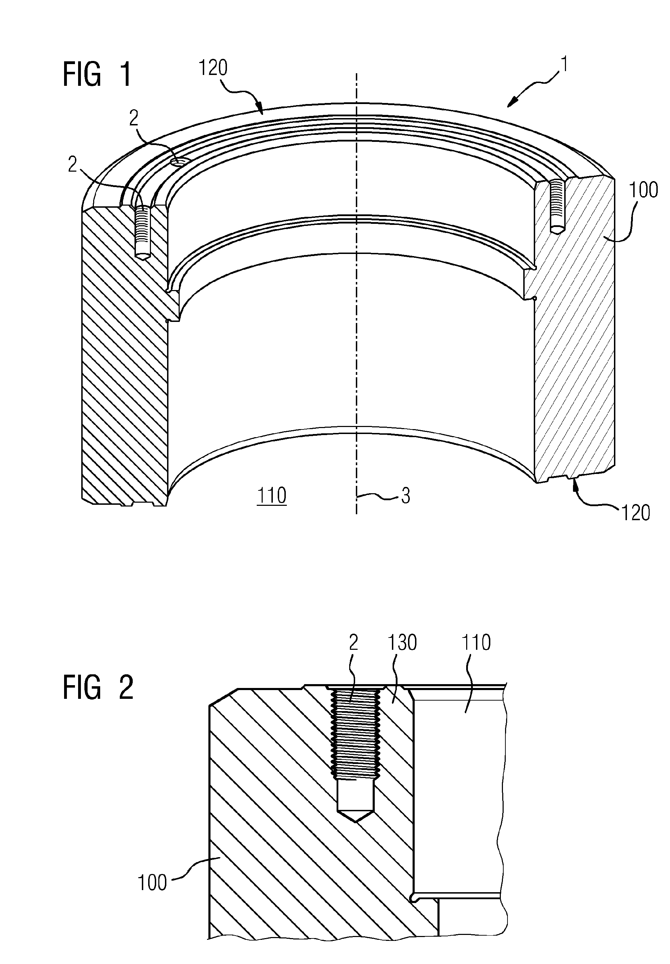

Fig. 1 zeigt ein Schnitt eines herkömmlichen Maschinenbauteils 1, nämlich eines Stahlrohlings, aus dem ein Planetenrad eines Planetengetriebes, z. B. für eine Windkraftanlage, hergestellt wird. Der Rohling 1 ist als ein ringförmiger Stahlkörper 100 ausgebildet, welcher eine Zentralöffnung 110 zur Aufnahme einer Planetenradachse umschließt. Der rotationssymmetrische Rohling 1 weist zwei Stirnseiten 120 auf, welche quer zur Rotationsachse 3 des Rohlings 1 verlaufen. An einer Stirnseite 120 des ringförmigen Stahlkörpers 100 sind, um die Zentralöffnung 110 herum, parallel zur Rotationsachse 3 verlaufende Gewindebohrungen 2 angeordnet.

In diese Gewindebohrungen 2 sind Schrauben einschraubbar. Diese Schrauben können Wirbelschrauben sein, an denen Haltemittel wie Ketten oder Seile befestigt werden können, um den Rohling zu transportieren. Diese Schrauben können auch Schrauben zum Befestigen einer Haltevorrichtung sein, womit der Rohling in einer Bearbeitungsmaschine fixiert werden kann, z.B. zum Bearbeiten wie Drehen, Fräsen, etc.

Fig. 2 zeigt ein vergrößertes Detail des Planetenrads von Fig. 1 in einem Bereich des Stahlkörpers 100, in dem eine Gewindebohrung 2 angeordnet ist. Deutlich ist das relativ schmale Verbindungsstück 130, welches zwischen der Gewindebohrung 2 und der Zentralöffnung 110 verläuft, zu erkennen.

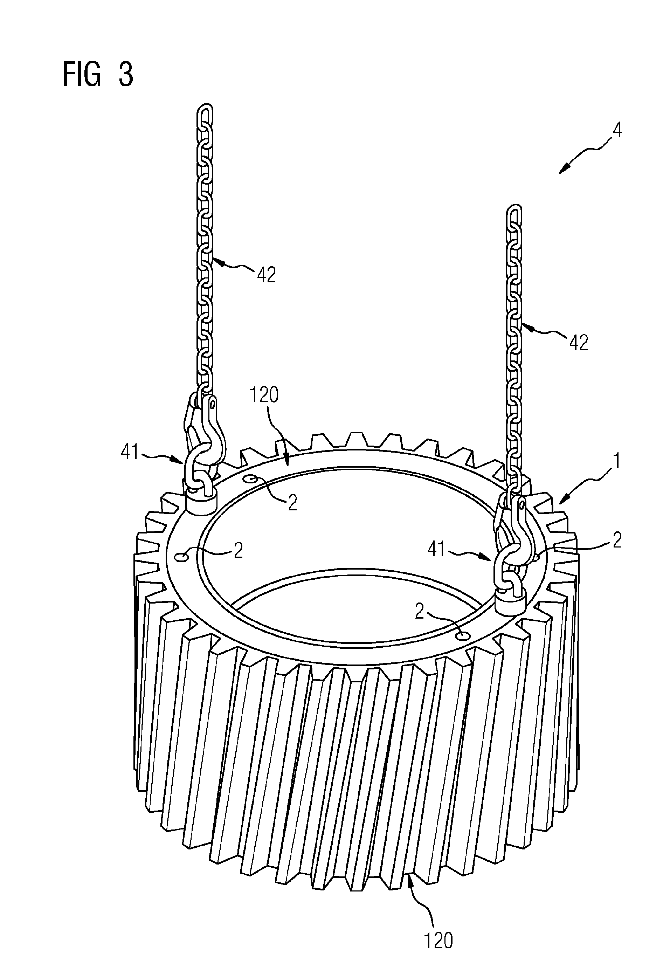

Fig. 3 ist eine Ansicht einer herkömmlichen Transportvorrichtung 4, bei der mit Gewindebolzen versehene Anschlagwirbel 41 an einer Stirnseite 120 eines Maschinenbauteils 1 in Form eines Planetenrads in entsprechenden Gewindebohrungen 2 des Planetenrads 1 eingedreht werden. Nachdem die Anschlagwirbel 41 auf diese Weise an dem Planetenrad 1 fixiert wurden, werden Ketten 42 in die Anschlagwirbel 41 eingehängt, so dass das Planetenrad 1 mittels der Transportvorrichtung 4 angehoben und transportiert werden kann.

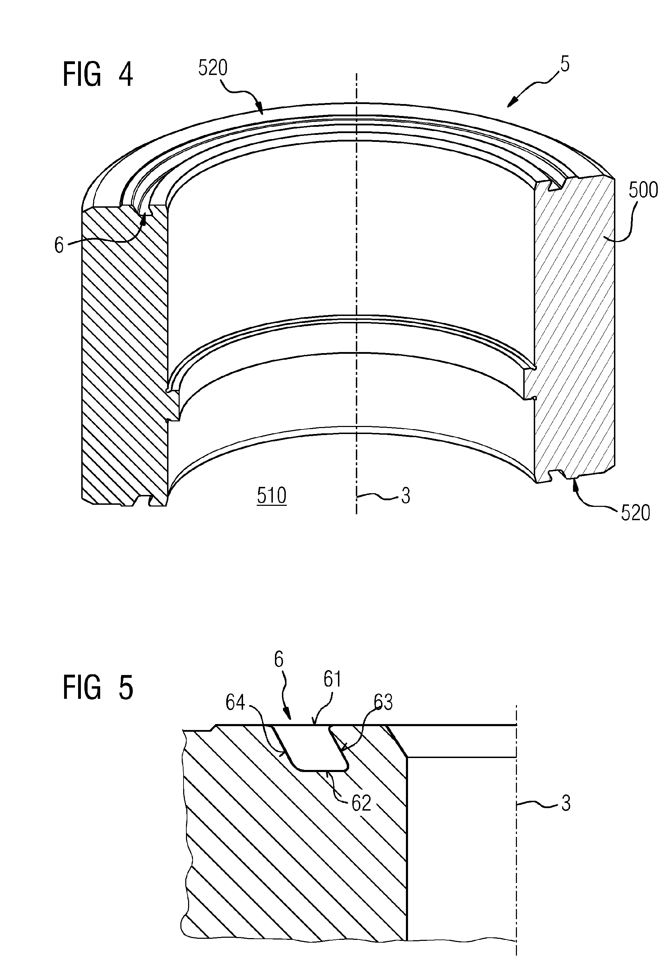

Fig. 4 zeigt einen Schnitt eines erfindungsgemäßen Rohlings 5 für ein Planetenrad. Der Rohling 5 hat im Wesentlichen dieselbe Form wie der in Fig. 1 gezeigte Rohling 1, unterscheidet sich von diesem jedoch darin, dass er keine Gewindebohrungen aufweist. Der erfindungsgemäßen Rohling 5 weist eine Ringnut 6 anstatt von Gewindebohrungen auf. Die Ringnut 6 ist in die nach oben weisende Stirnseite 520 eingedreht und bezüglich der Rotationsachse 3 des Rohlings 5 zentriert. Das in Fig. 4 gezeigte Maschinenbauteil weist auch in der nach unten weisenden Stirnseite eine Ringnut auf.

Fig. 5 zeigt eine Vergrößerung des in Fig. 4 markierten Details des Rohlings 5. Die Ringnut 6 weist eine Nutöffnung 61 und einen Nutboden 62 sowie eine radial innere Nutwand 63 und eine radial äußere Nutwand 64, welche sich jeweils zwischen der Nutöffnung 61 und dem Nutboden 62 erstrecken, auf. Dabei weist die radial innere Nutwand 63 in ihrem Verlauf von der Nutöffnung 61 zum Nutboden 62 eine Neigung zu der Rotationsachse 3 hin auf; diese Hinterdrehung ermöglicht ein Einhängen der Nutsteine der Spannkralle. Die radial äußere Nutwand 64 weist in dem dargestellten Ausführungsbeispiel dieselbe Neigung auf wie radial innere Nutwand 63. Da aber allein die radial innere Nutwand 63 zum Verspannen genutzt wird, ist es möglich, der radial äußeren Nutwand 64 einen Verlauf zu geben, der von der Neigung der radial inneren Nutwand 63 abweicht, z.B. einen senkrechten Verlauf oder einen zu der radial inneren Nutwand 63 spiegelbildlichen Verlauf.

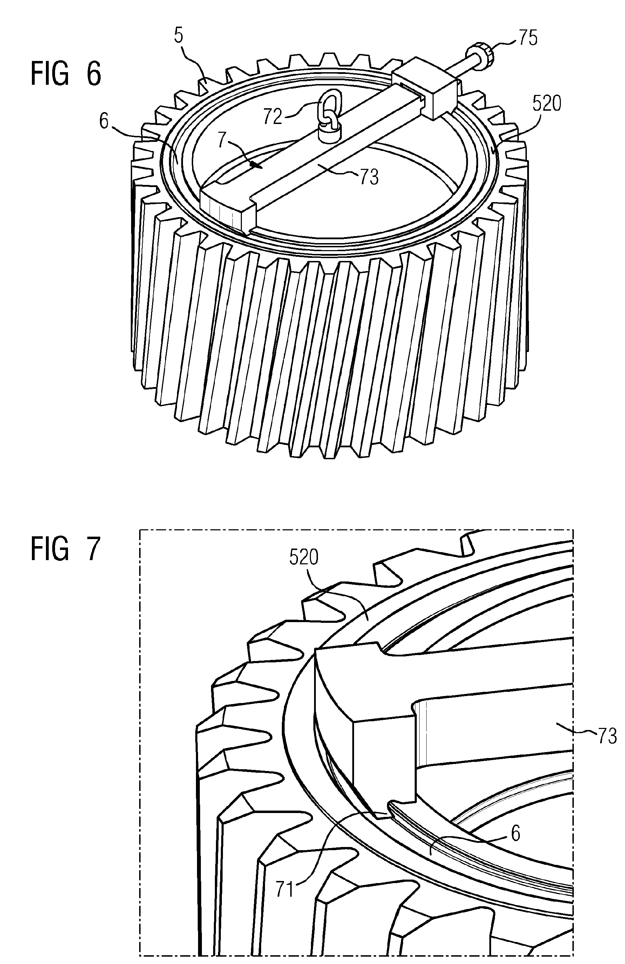

Fig. 6 ist eine Ansicht einer erfindungsgemäßen Spannvorrichtung 7 zum Anbringen an einem rotationssymmetrischen Maschinenbauteil. Die Spannvorrichtung 7 weist einen Querbalken 73 auf, an dessen Enden zwei Spannkrallen zum Einführen in die Ringnut 6 des Maschinenbauteils 5 sitzen. Dabei weisen die Spannkrallen an den einander zugewandten Seiten eine an die Form der Ringnut 6 angepasste Formgebung auf. Außerdem weist die Spannvorrichtung 7 in ihrer Mitte einen Wirbel 72 zur Aufnahme eines Hebewerkzeugs auf.

Fig. 7 zeigt ein Detail der Spannvorrichtung 7 von Fig. 6. Eine der Spannkrallen 71 sitzt in der Ringnut 6 und ist gegen eine diametral gegenüberliegende zweite Spannkralle 71 der Spannvorrichtung 7 verspannt.

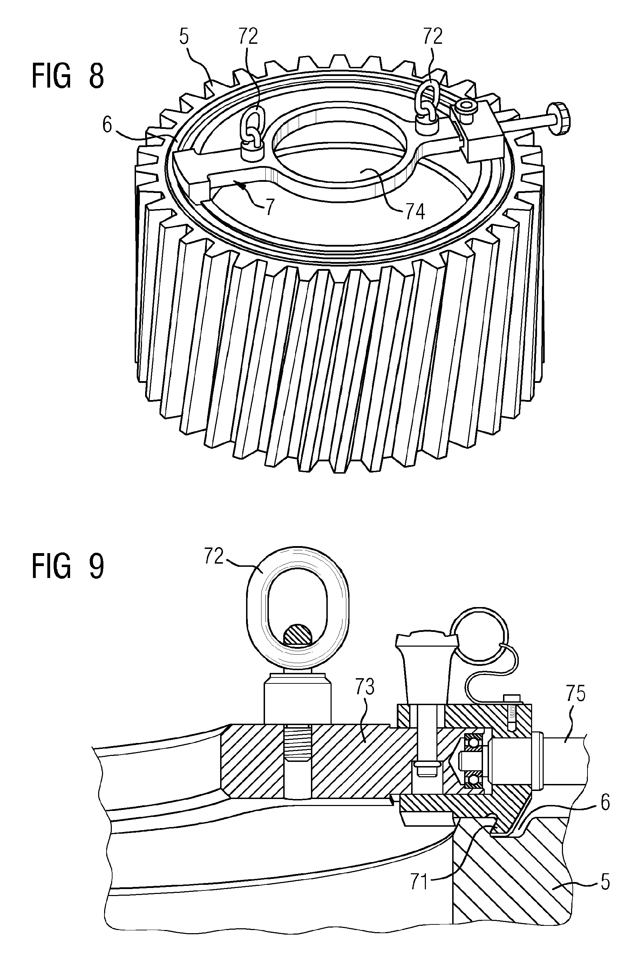

Fig. 8 ist eine Ansicht einer alternativen Ausgestaltung einer erfindungsgemäßen Spannvorrichtung 7 auf einem Rohling 5. Diese Ausgestaltung einer Spannvorrichtung 7 ist durch eine mittige Öffnung 74 in dem Querbalken gekennzeichnet. Außerdem sind beiderseits der Öffnung 74 ein Paar Wirbel 72 zur Aufnahme eines Hebewerkzeugs in den Querbalken eingedreht.

Fig. 9 ist ein Schnitt einer Spannvorrichtung von Fig. 8. Die Spannkralle 71 ist durch eine vorzugsweise manuelle bedienbare Schraubvorrichtung 75, die am Ende des Querbalkens 73 angeordnet ist, gegen eine diametral gegenüberliegende zweite Spannkralle verspannbar.

Daneben ist ein als Arretierungssplint ausgebildeter Sicherungsbolzen in den Querbalken 73 und die gegen den Querbalken verschiebbare Spannkralle der Spannvorrichtung eingesetzt, der durch eine an der Spannkralle angeschraubte Schnur gegen Verlust gesichert ist. Der Arretierungssplint ist so ausgebildet, dass er nur bei ausreichender Verspannung der Spannvorrichtung in der Ringnut nach innen in den Querbalken einrastet. Auf diese Weise ist für einen Bediener an dem Arretierungssplint mit einem Blick erkennbar, ob ein sicherer Sitz der Spannvorrichtung an dem Maschinenbauteil vorliegt.

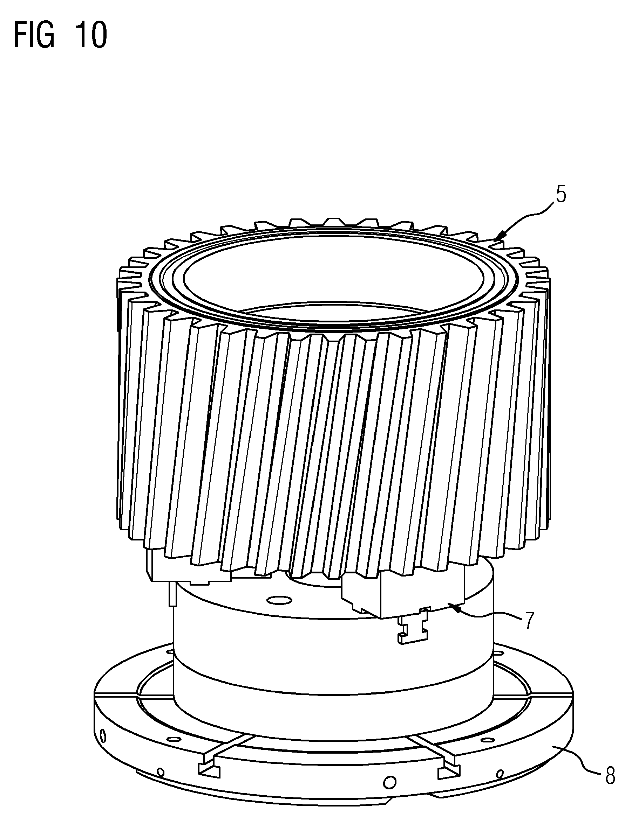

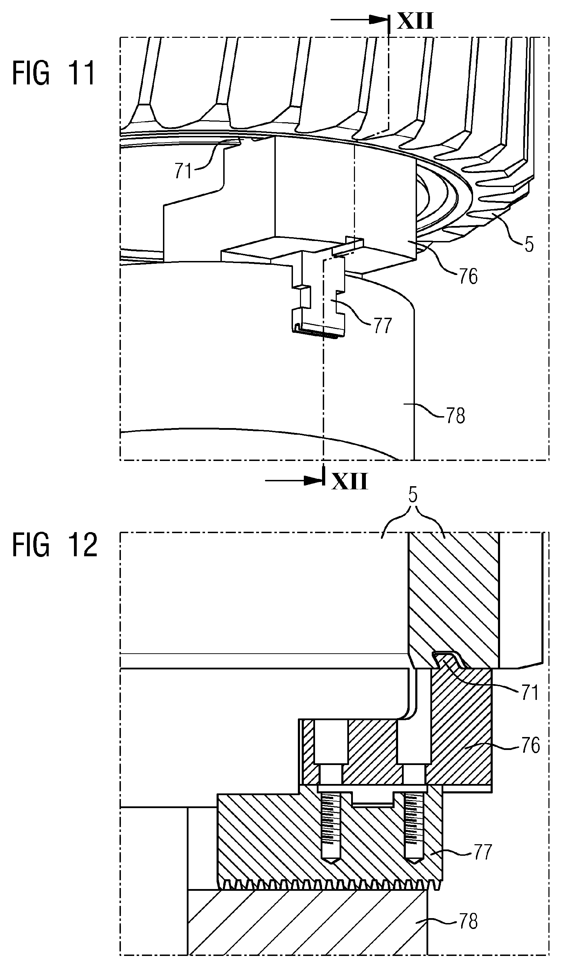

Fig. 10 ist eine Ansicht einer Aufspannung eines Rohlings 5 mittels einer Spannvorrichtung 7 an einem Rotor 8 einer Bearbeitungsmaschine, insbesondere einer Dreh- oder Schleifmaschine. Fig. 11 zeigt ein Detail von Fig. 10, nämlich die Verbindung der Spannvorrichtung 7 mit dem Maschinenrotor 8. Fig. 12 zeigt einen Schnitt der Aufspannungsanordnung von Fig. 11 entlang der in Fig. 11 angegebenen Schnittlinie XII-XII.

Fig. 10 bis 12 zeigen ein mittels eines Dreibackenspanfutters auf einer Bearbeitungsmaschine 8 aufgespanntes Planetenrad 5. So ist eine Innen- und Außenbearbeitung des Planetenrads 5 in einer einzigen Aufspannlage möglich. Dabei weist eine Spannbacke 76, die sog. weiche Backe, eine Kralle bzw. einen Nutstein 71 auf, die bzw. der in die stirnseitige Ringnut 6 des Planetenrads 5 eingreift. Die Spannbacke 76 ist mit einer Grundbacke 77, der sog. harten Backe, verschraubt. Die Grundbacke 77 ihrerseits ist an dem eigentlichen Spannfutter 78 angeordnet und mittels eines spiralförmigen Plangewindes relativ zu dem Spannfutter 78 verschiebbar.

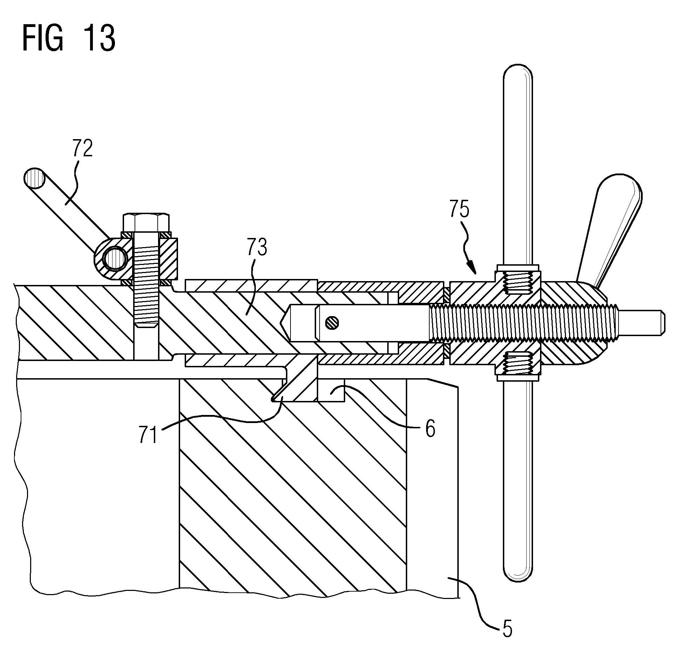

Fig. 13 ist ein Schnitt einer alternativen Spannvorrichtung. Beim Drehen einer Spannmutter 75 relativ zu einer Gewindestange wird die Spannkralle 71 gegenüber dem Querbalken 73 verschoben. Die Spannkralle 71 wird durch Anziehen der Spannmutter 75, welche durch zwei Handgriffe mit hohem Drehmoment angezogen werden kann, in der Ringnut 6 verspannt. Zur Sicherung dieser Endstellung der Spannmutter 75 wird eine Kontermutter von dem Ende der Gewindestange her auf die Spannmutter 75 aufgeschraubt und gegen diese verspannt. Zum Beaufschlagen der Kontermutter mit Drehmoment weist die Kontermutter einen Handgriff auf.

## Patentansprüche

1. Rotationssymmetrisches Maschinenbauteil (5), wobei in mindestens einer quer zur Rotationsachse (3) verlaufenden Stirnseite (520) des Maschinenbauteils (5) eine zur Aufnahme einer Spannvorrichtung (7) geeignete Ringnut (6) eingedreht ist, welche bezüglich der Rotationsachse (3) zentriert ist.

2. Rotationssymmetrisches Maschinenbauteil nach Anspruch 1, wobei die Ringnut eine Nutöffnung und einen Nutboden sowie eine radial innere Nutwand und eine radial äußere Nutwand, welche sich jeweils zwischen der Nutöffnung und dem Nutboden erstrecken, aufweist, wobei die radial innere Nutwand in ihrem Verlauf von der Nutöffnung zum Nutboden eine Neigung zu der Rotationsachse hin aufweist.

3. Rotationssymmetrisches Maschinenbauteil nach Anspruch 1 oder 2, wobei in beiden quer zur Rotationsachse verlaufenden Stirnseiten des Maschinenbauteils jeweils eine zur Aufnahme einer Spannvorrichtung geeignete Ringnut eingedreht ist, welche bezüglich der Rotationsachse zentriert ist.

4. Rotationssymmetrisches Maschinenbauteil nach einem der vorhergehenden Ansprüche, wobei das Maschinenbauteil ein Rohling zur Fertigung eines Zahnrads oder das aus dem Rohling gefertigte Zahnrad ist.

5. Zahnrad, welches ein rotationssymmetrisches Maschinenbauteil nach einem der vorhergehenden Ansprüche ist, mit einem Zahnring und einer von dem Zahnring umschlossenen Zentralöffnung, wobei die Ringnut die Zentralöffnung vollständig umschließt.

6. Zahnrad nach Anspruch 5, wobei das Zahnrad ein Planetenrad ist.

7. Spannvorrichtung zum Anbringen an einem rotationssymmetrischen Maschinenbauteil nach einem der Ansprüche 1 bis 4, wobei die Spannvorrichtung mindestens zwei Spannkrallen zum Einführen in eine Ringnut des Maschinenbauteils aufweist.

8. Spannvorrichtung nach Anspruch 7, wobei die Spannkrallen an den einander zugewandten Seiten eine an die Form der Ringnut angepasste Formgebung aufweisen.

9. Verfahren zum Anbringen einer Spannvorrichtung an einem rotationssymmetrischen Maschinenbauteil, wobei in mindestens einer quer zur Rotationsachse verlaufenden Stirnseite des Maschinenbauteils eine zur Aufnahme der Spannvorrichtung geeignete Ringnut eingedreht ist, welche bezüglich der Rotationsachse zentriert ist, wobei Krallen der Spannvorrichtung an mindestens zwei Stellen der Ringnut in die Ringnut eingesetzt und gegeneinander verspannt werden.
